# EUROPEAN PATENT APPLICATION

(11) **EP 2 067 991 A2**
(43) Date of publication of application: **10.06.2009**
(21) Application number: 08170069.2
(22) Date of filing: 27.11.2008
(51) Int. Cl.: F03D 11/00

(54) **Active damper against generator base frame vibrations**

(30) Priority: 06.12.2007 US 951650
(71) Applicant: General Electric Company, Schenectady, NY 12345 (US)
(72) Inventor: Edenfeld, Thomas, 49080 Osnabrück (DE)
(74) Representative: Bedford, Grant Richard

(57) **Abstract**

A damper system for damping base frame vibrations of a wind turbine having a tower (20), a nacelle (22), a frame (330, 332) in the nacelle, at least one rotor blade, and a generator, the damper system includes a mass (110; 310) for damping vibrations of the frame, wherein the mass is positioned outside a vibration center and at least one drive mechanism adapted for actively controlling a movement of the mass.

## Description

The present invention relates generally to wind turbines. Particularly, the invention relates to a system for reducing vibrations and a method of damping vibrations. Specifically, the invention relates to a damper system for damping vibrations of a wind turbine, a system for reducing vibrations of a wind turbine and a method for reducing vibrations of a wind turbine.

Wind turbines increase in size and rated power. Thereby, loads and stress on the construction parts, like the tower of the wind turbine, also increases. Further, highly turbulent wind speeds may introduce vibrations. A compensation of the loads on the tower by providing additional material strength increases the required amount of material and thus, the costs. Thus, a compensation of the additional loads by stronger and/or additional material strength to withstand the loads reduces the competitiveness of wind turbines as compared to other ways of generating energy.

In view of the above, according to one embodiment of the present invention, a damper system for damping frame vibrations of a wind turbine having a tower, a nacelle, a frame in the nacelle, at least one rotor blade, and a generator is provided. The damper system includes a mass for damping vibrations of the frame, wherein the mass is positioned outside a vibration center, and at least one drive mechanism adapted for actively controlling a movement of the mass.

Further embodiments refer to wind turbines including damper systems and systems for reducing wind turbine generator base frame vibrations as described herein. Yet further embodiments are also directed to wind parks including a plurality of wind turbines, wherein wind turbines include damper systems and systems for reducing wind turbine generator base frame vibrations as described herein.

According to another embodiment, a method for reducing frame vibrations of a wind turbine is provided. The method includes actively controlling the movement of a mass being positioned outside a vibration center, wherein the mass is actively controlled by a drive mechanism accelerating the mass with respect to the frame.

According to another embodiment, a method for reducing frame vibrations of a wind turbine is provided. The method includes actively controlling the torque of a generator in order to generate lateral forces to the frame.

Further embodiments, aspects, advantages and features are apparent from the dependent claims, the description and the accompanying drawings, in which:
- Fig. 1: shows a schematic drawing illustrating a wind turbine including an active damper for damping frame vibrations according to embodiments described herein;
- Fig. 2: shows a further schematic drawing illustrating a wind turbine including an active damper for damping frame vibrations according to embodiments described herein;
- Fig. 3: shows a schematic drawing illustrating a portion of a nacelle of a wind turbine including an active mass damper for damping frame vibrations according to embodiments described herein;
- Figs. 4a and 4b: show schematic drawings illustrating a generator frame and generator of a wind turbine used for damping frame vibrations according to embodiments described herein;
- Fig. 5: shows a schematic drawing illustrating a wind turbine including a control scheme an elements of an active damper for damping frame vibrations according to embodiments described herein; and
- Figs. 6a to 6c: show diagrams illustrating active damping methods for damping frame vibrations according to embodiments described herein.

Reference will now be made in detail to the various embodiments of the invention, one or more examples of which are illustrated in the figures. Each example is provided by way of explanation of the invention and is not meant as a limitation of the invention. For example, features illustrated or described as part of one embodiment can be used on or in conjunction with other embodiments to yield yet a further embodiment. It is intended that the present invention includes such modifications and variations.

Modem wind turbines experience an increase in size, which includes an increase in rotor diameter. In particular, megawatt and multi-megawatt wind turbines are more commonly installed. Thereby, an increase in the size and power output of the wind turbines also result in an increase of the loads on the components. For example, if the wind is turbulent, vibrations such as lateral vibrations may occur.

According to embodiments described herein, the loads, which might for example be introduced by turbulent wind, and which can result in lateral vibrations of components within the nacelle, can be reduced by providing an active damper. Accordingly, reinforcement of the base frame, that is, the bedplate, the generator frame, a generator frame that might be a portion of the base frame, connections within the base frame or combination thereof can be reduced or avoided.

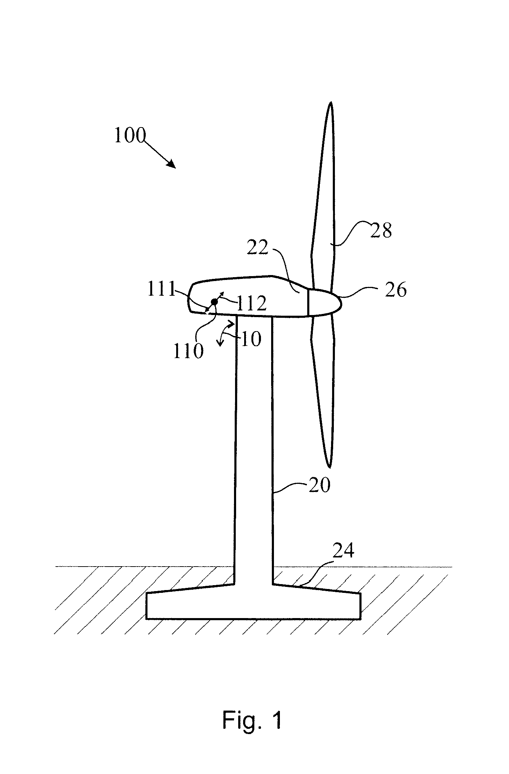

According to one embodiment, as shown in figure 1, a wind turbine 100 includes a tower 20, which is mounted on a foundation 24. On top of the tower 20 there is a nacelle 22. The hub 26 is mounted to the nacelle and carries the rotor blades 28.

According to one embodiment, the wind turbine 100 can include three rotor blades 28. According to other embodiments, one, two or four rotor blades may be included in the wind turbine. According to yet further embodiments, the wind turbine 100 can be a horizontal axis wind turbine, as shown in figure 1. However, according to other embodiments, other types of wind turbines, for example, a wind turbine with the vertical axis can be used.

As indicated by arrow 10 in figure 1, loads such as asymmetric loads, which may for example be introduced by turbulent wind, may result in lateral vibrations of the nacelle 22 or components with in the nacelle 22. For example, a torque can be introduced. According to some embodiments described herein, the mass 110 is attached within the nacelle 22. As indicated by arrows 111 and 112, the movement of the mass 110 can be generated. Thereby, according to different embodiments, the position, velocity and/or acceleration of the mass 110 can be controlled. Thereby, typically, a drive mechanism actively controls the position, velocity and/or acceleration of the mass with respect to components in the nacelle 22.

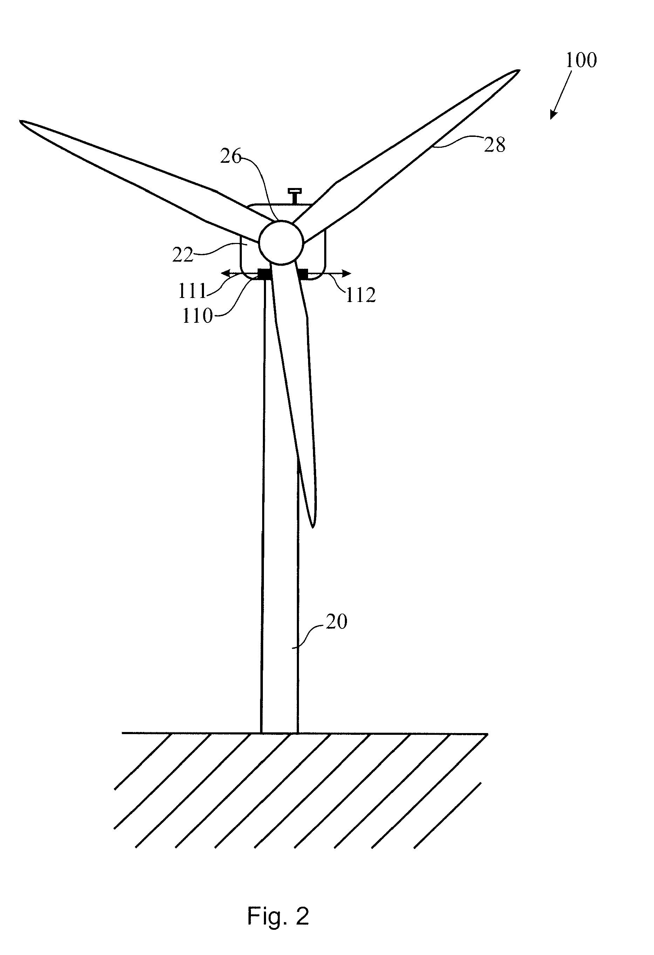

Figure 2, which illustrates embodiments described herein, shows a different view of a wind turbine 100. The wind turbine 100 includes a tower 20, nacelle 22, hub 26 and rotor blades 28. The mass 110 is again moved as indicated by arrows 111 and 112. According to some embodiments described herein, the mass 110 can be a lumped mass, which is located in the nacelle 22.

Generally, if a lateral vibration as indicated by arrows 10 in figure 1 is created, the mass 110 needs to be positioned off- axis and/or outside the vibrational center of a torsional vibration. Thereby, in the example shown in figure 1, the axis can be essentially the axis of the tower 20. According to other embodiments, with respect to the example shown in figure 1, the axis can be vertical and is defined by the connecting flange between the tower 20 and the nacelle 22 or the center of the nacelle.

Thus, according to embodiments described herein, an active damper or an active damper system is provided in the nacelle. Generally, according to some embodiments, in order to actively damp lateral base frame vibrations, the mass responsible for active damping, is located outside the mounting location of the nacelle. According to some embodiments described herein, the active damper is provided in the back of the nacelle.

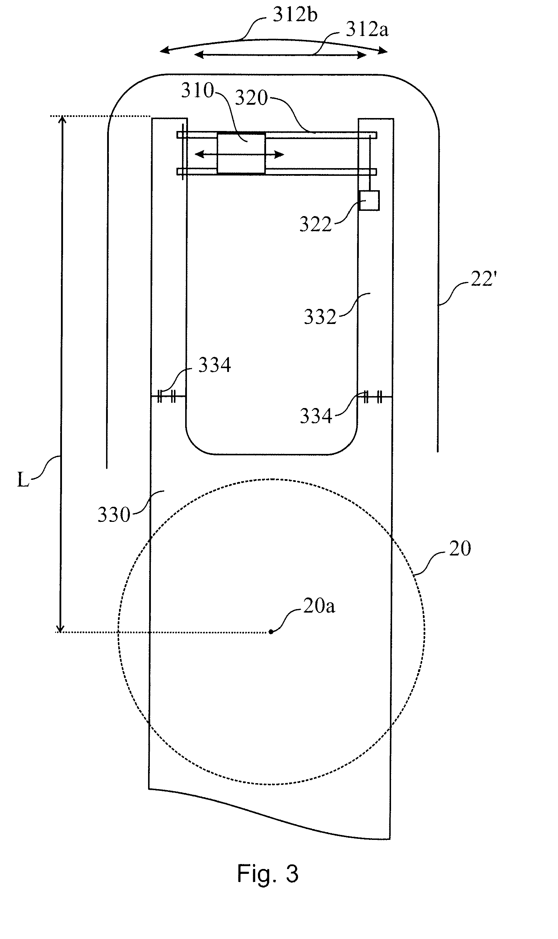

Figure 3 shows portion of a wind turbine and illustrates some embodiments described herein. Figure 3 shows a portion of the housing 22' of a nacelle. Further, Figure 3 shows schematically the tower 20 below the nacelle and shows schematically the tower center 20a. Figure 3 further shows a bedplate, i.e. a base frame 330 and the generator frame 332. According to some embodiments, the generator frame can be a portion of the bedplate and can, for example, be constructed integral as a single-piece unit with the bedplate. The bedplate 330, the generator frame 332 and other parts of the bedplate can be connected to each other by connecting elements 334 such as bolds, screws or the like. According to other embodiments, the generator frame 332, which supports the generator, can be a portion of the base frame, i.e. the bedplate. The generator (not shown) is provided on the generator frame 332. Varying loads can be provided to the generator during turbulent winds or the like. Thereby, lateral movements of the generator frame 332, the generator frame and the entire bedplate 330 or base frame, components within the nacelle, or the nacelle can be excited by the turbulent wind speeds. For example, the base frame seems to be excited at its eigenfrequencies.

The area of the tower can be considered as a stationary center with regard to the horizontal frame vibrations considered herein. The vibrations around the tower axis 20a and/or around a connection flange (not shown) between the tower and the nacelle are indicated by arrows 312a and 312b. Thereby it is possible that a rotational vibration according to arrow 312b, a linear vibration shifting the bedplate and/or the generator frame in a trapezoidal manner, or a combination thereof may occur.

These lateral vibrations can be actively damped by use of a movable mass 310, which is moved in the opposite direction to the measured vibrations. In figure 3 the mass 310 is provided on a sledge 320. The mass 310 can according to some embodiments be driven by a V-ripped belt, which is driven by a motor, for example an AC motor and frequency converter. According to other embodiments, the motor 322 can be a linear motor for driving the sledge 320.

According to some embodiments, a mass (e.g., the mass 310) is moved in lateral directions. This may significantly reduce base frame vibrations since a majority of base frame vibrations relate to lateral movement of the generator frame, which is, for example, excited by turbulent wind speeds.

According to some embodiments described herein, which can be combined with any of the other embodiments, the mass is provided in the back of the nacelle, particularly if generator frame vibrations are to be compensated for. Thereby, the back of the nacelle is understood as being the rear end of the nacelle at the end opposing the position of the hub.

According to some embodiments, the mass is provided at least in the back 30% or back 10 % of the lengths L from the tower axis 20a to the end of the frame, in Fig. 3 the end of the generator frame in direction from the hub to the back end of the nacelle. If a lateral vibration of the entire base frame or the generator frame is considered, which might result in torsion with respect to an axis, it is desirable to have the active damping mass as far as possible distance from the axis of the torsion. Thereby, generally, according to some embodiments described herein, the axis for describing the torsion can be the center of the nacelle, the mounting position of the nacelle with respect to the tower, or the axis of the tower. According to other embodiments, the mass is provided on the generator frame, which can also be the portion of the base frame or bedplate on which the generator is located.

According to further embodiments, the actuators which are connected to the mass for control of the movement of the mass can be hydraulic actuators. According to yet other embodiments, electrical actuators like AC motors or linear motors or combination of hydraulic and electric actuators can be used. Additionally, according to yet even further embodiments, a gear or a lever may be provided for control of the movement of the mass.

Exemplarily referring back to figure 3, the movement of the mass 310 can be controlled in such a way that it reduces the vibrations of the frame such as a generator frame and/or a base frame. Thereby, the mass is controlled to typically move in the direction of opposing the vibrations.

The actively controlled mass damps or reduces the vibrations. This reduces the static and dynamic stress. As a consequence, reinforcement of the base frame, the generator frame or a connection within the base frame, e.g., of a generator frame 332 can be avoided. Further, it might even be possible to reduce the strength and, thus, the weight of some components.

By actively controlling the mass, it is possible to deploy a small mass as compared to passive mass dampers. The smaller mass results in a reduction of costs, reduction of occupied space, and an improvement in reaction times of the active damper.

According to different embodiments, the mass can be provided in the form of weights made of materials with a sufficiently high density so that the dimensions of the weight do not need to be excessive. This can, for example, be materials like concrete, stone materials, iron, steel, or steel alloys. According to further embodiments, the mass can be regularly shaped in the form of plates, cylinders, or plates. Alternatively, the mass may be irregularly shaped with protrusions, recesses and openings. This can, for example, be used if constructional considerations require access to certain portions of the nacelle.

According to some embodiments described herein, the actively controlled mass can reduce vibrations of the frames or components with in the nacelle at frequencies of 20 Hz or below, typically frequencies in the range of 1 to 5 Hz or 0.1 to 5 Hz. (Other application included 20 Hz or below 20 Hz and range of 0.1 to 10 Hz).

As described above, an active control of the mass damper can be used to reduce the size of the mass. According to one embodiment, the mass may be 100 kg to 3000 kg. According to another embodiment, the mass may be 200 kg to 400 kg. Generally, the size of the mass can depend on the size of the wind turbine. Thereby according to even further embodiments, the mass per wind turbine power output may be 100 kg/MW to 1000 kg/MW. For example, the mass can also be within 200 kg/MW to 500 kg/MW.

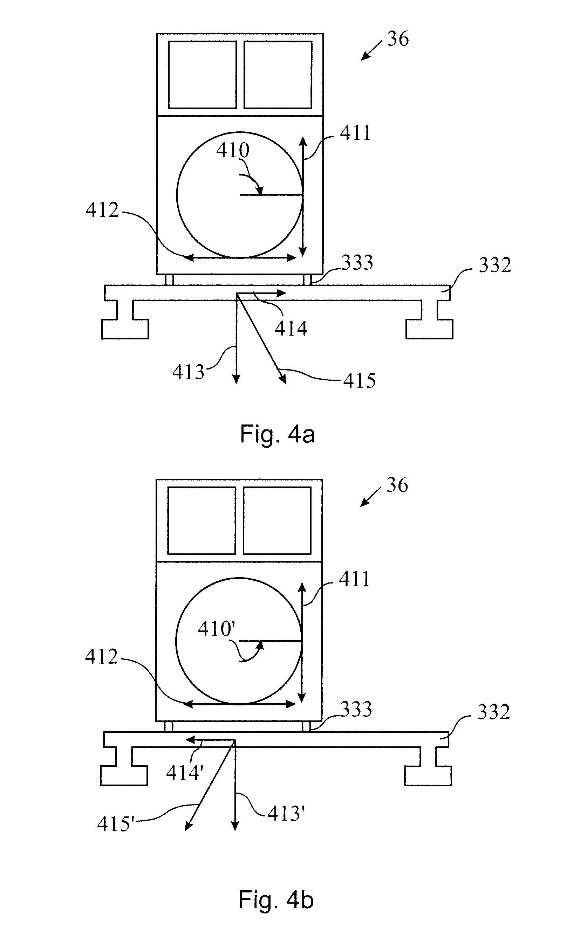

Further embodiments of the invention will now be described with respect to figures 4a and 4b. Figures 4a and 4b show the generator frame 332 and the generator 36 located on the generator frame 332. Within the nacelle, the generator 36 is located towards the back of the nacelle, that is, the end of the nacelle opposing the hub position.

The generator 36 is driven by a drivetrain connected to the hub. Generally, during operation, the generator can experience vertical and horizontal forces as indicated by arrows 411 and 412.

The torque of the generator bends the generator frame. Therefore, the load path of the generator, which is for example provided by the support portion 333 supporting the generator 36 on a generator frame 332, has not only the vertical force but also a lateral force. Within figures 4a and 4b, the forces are indicated by arrows 413, 414 and 415 or 413', 414' and 415', respectively. According to different embodiments, control of the generator can be used to influence the torque within the generator. Generally, when the generator is controlled by means of frequency inverters, d-q control, and/or d-q transformation, it allows for a control of the generator such that the generator torque leads the rotation of the drivetrain, i.e., there is a slip forward, or the generator torque can lag the rotation of the drivetrain, i.e., there is a slip backward. These two options are indicated by arrows 410 and 410' in figures 4a and 4b.

As illustrated in figures 4a and 4b, the slip of the generator can influence the direction of the lateral forces 414 and 414', respectively. Accordingly, by means of an appropriate control of the torque of the generator, an actively controllable lateral force can be provided to the generator frame 332. Thereby, the lateral force for reducing vibrations typically opposes the vibration of the base frame. Therefore, the generator 36 can be used to provide an active damping of lateral vibrations of the frames.

According to different embodiments described herein, the frame vibration with a frequency below 20 Hz, between 0.1 to 10 Hz or 1 to 5 Hz can be compensated for. Thereby, according to yet further embodiments, a control of the active damping system should be at least a factor 10 faster as compared to the frequency of the vibration. As an example, the control of the mass 310 shown in figure 3 or a control of a generator 36 shown in figures 4a and 4b can have a reaction times of 50 ms or faster. Typically, reaction times will be 1000 ms, 100 ms or faster, e.g., even in the range of several 100 µs. According to yet further embodiments, the control mechanism and/or the drive mechanism acts on the position, velocity and/or acceleration of the mass with reaction times in the microsecond range, typically 1 ms to 1000 ms. Additionally or alternatively, the generator control acts with a reaction time in the microsecond range, typically 1 ms to 1000 ms, for example 100 ms.

Generally, the vibrations of the frames such as the base frame and/or the generator frame have a velocity component which may be described as being essentially perpendicular to the wind direction. However, due to changes of the wind direction or other influences, the vibration direction can vary to some degree such that other vibration components, e.g., with other directions, are included beyond the vibration described as a torsional vibration above. According to further embodiments, which can be combined with any of the embodiments described herein, the mass used for actively damping vibrations of the frame may be controlled to be positioned, moved and/or accelerated in more than one dimension. It will be understood by a person skilled in the art that additional dimensions of movement of the mass can be applied in a similar manner as described above for one dimension.

According to yet further embodiments, the above described mass control and the control of the torque of the generator can be combined to yield yet further embodiments.

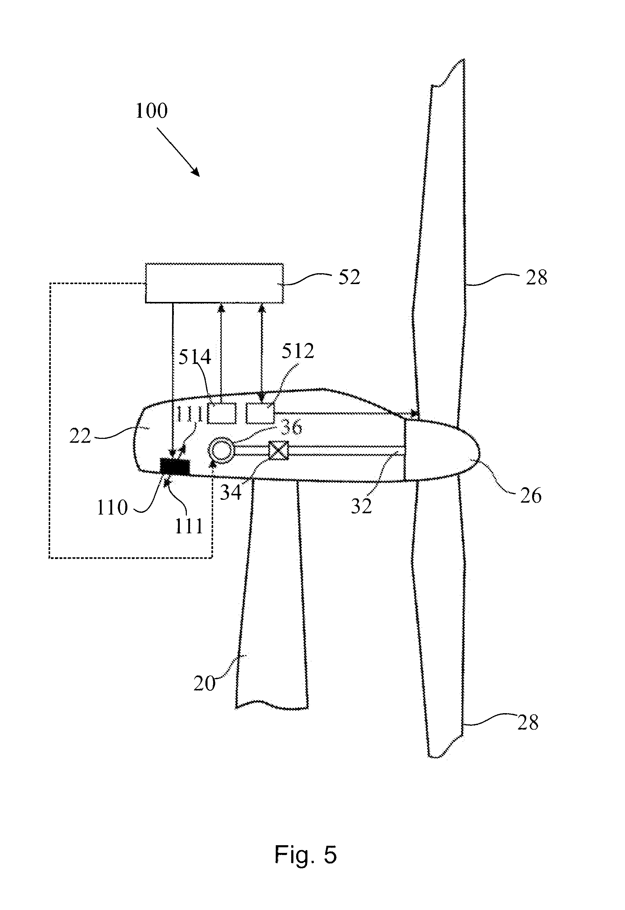

Figure 5 illustrates further embodiments of a wind turbine 100. The wind turbine 100 includes tower 20, nacelle 22 and hub 26, which is mounted to the nacelle 22. The rotor blades 28 are carried by the nacelle 22. The drive train 32 connects the rotating hub 26 with the gearbox 34 and the generator 36.

According to some embodiments, the vibration sensor 514 such as a vibration monitoring unit is provided. The vibration sensor 514 is connected to the control unit 52. Further, the control unit 52 is connected to the active mass damping system located in the back and of the nacelle. Upon control of the control unit 52, the mass 110 is moved as indicated by arrows 111 and 112. Thereby, according to different embodiments, the position, velocity and/or acceleration of the mass 110 is controlled. As indicated by dashed line 536, alternatively or additionally the controller can control the torque of the generator 36 for active vibration damping.

According to yet further embodiments, which can be combined with other embodiments described herein, an asymmetric load controller 512 can be provided. The asymmetric load controller (ALC) is in communication with the control unit 52. According to one embodiment, the asymmetric load controller measures bending of the shaft of the drivetrain 32 in order to measure asymmetric loads provided by turbulent wind speeds or other influences. The ALC controls the pitch of the individual rotor blades 28. Thereby, an offset in the pitch of the individual rotor blades 28 are provided dependent of the rotating position of the rotor blades. Thereby, an asymmetric load can be compensated for. According to yet further embodiments, the asymmetric load measurement due to bending measurements of the shaft of the drivetrain can be used alternatively or additionally to the vibration sensor 514 as an input for the control unit 52. Thereby, according to one embodiment, the bending measurement can be used for active control of the movable mass and/or active control of the generator torque for vibration reduction.

Generally, according to embodiments described herein, a lateral vibration of the frame such as a base frame and/or a generator frame or a portion of the base frame, which can be the generator frame, is measured. As a result of the measured vibrations an active control of a movable mass in the back of the nacelle and/or an active control of the generator torque are applied.

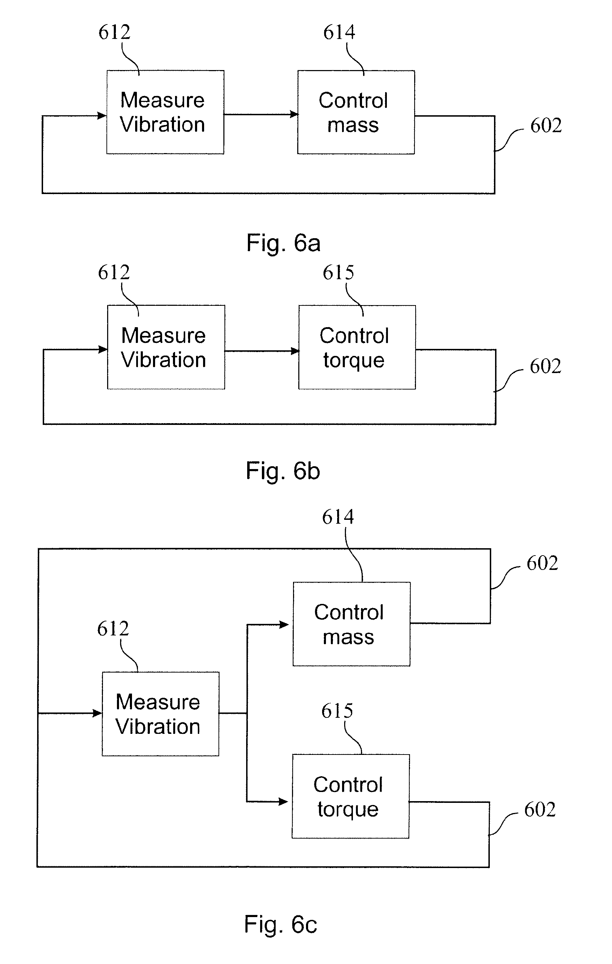

Figures 6a to 6c described different embodiments of active damping of generator frame vibrations. According to one embodiment, as shown in figure 6a, frame vibrations are measured in step 612. In response to the measured vibrations an actively controlled mass is controlled in step 614. Accordingly, the mass is moved such that the base frame vibrations and/or generator frame vibrations can be reduced. Thereby, as indicated by arrow 602 a continuous feedback control is provided such that a measurement is conducted with the frequency of 1 Hz, 10 Hz or even 1 kHz. The control of the mass is provided in response with reaction times described above.

According to another embodiment, as shown in figure 6b, frame vibrations are measured in step 612. In response to the measured vibrations torque of a generator is controlled in step 614. Accordingly, the torque is controlled such that the base frame vibrations and/or generator frame vibrations can be reduced. Thereby, as indicated by arrow 602 a continuous feedback control is provided such that a measurement is conducted with the frequency of 1 Hz, 10 Hz or even 1 kHz. The control of the torque is provided in response with reaction times described above.

According to yet another embodiment, as shown in figure 6c, frame vibrations are measured in step 612. In response to the measured vibrations an actively controlled mass is controlled in step 614. Accordingly, the mass is moved such that the base frame vibrations and/or generator frame vibrations can be reduced. Thereby, as indicated by arrow 602 a continuous feedback control is provided such that a measurement is conducted with the frequency of 1 Hz, 10 Hz or even 1 kHz. The control of the mass is provided in response with reaction times described above. Further, in response to the measured vibrations torque of a generator is controlled in step 614. Accordingly, the torque is controlled such that the frame vibrations can be reduced. Thereby, as indicated by arrow 602 a continuous feedback control is provided such that a measurement is conducted with the frequency of 1 Hz, 10 Hz or even 1 kHz. The control of the torque is provided in response with reaction times described above.

According to various embodiments, which can be combined with other embodiments described herein, an active control can reduce a torsional and/or lateral vibration around a vertical axis of the wind turbine.

Various aspects and embodiments of the present invention will now be defined in the following numbered clauses:
1. A damper system for damping frame vibrations of a wind turbine having a tower, a nacelle, a frame in the nacelle, at least one rotor blade, and a generator, the damper system comprising:
   a mass for damping vibrations of the frame, wherein the mass is positioned outside a vibration center;
   at least one drive mechanism adapted for actively controlling a movement of the mass.
2. The damper system of clause 1, wherein the mass is positioned towards an end of the frame opposing to the rotor blade position.
3. The damper system of any preceding clause, wherein the mass is positioned in length direction within the ending 30 % of a length, wherein the length is defined from the tower axis to the end of the frame in a direction from the rotor blade to the opposing end of the nacelle.
4. The damper system of any preceding clause, wherein the mass is 100 kg to 3000 kg.
5. The damper system of any preceding clause, wherein the mass per power output of the wind turbine is 100 kg/MW to 1000 kg/MW.
6. The damper system of any preceding clause, wherein the at least one actuator is hydraulic, electrical, or a combination thereof.
7. The damper system of any preceding clause, wherein the at least one drive mechanism is adapted for actively controlling a movement of the mass in lateral direction.
8. The damper system of any preceding clause, wherein the mass is mounted on a sledge, which is driven by a V-ripped belt or a linear motor.
9. The damper system of any preceding clause, wherein the drive mechanism is connected to a controller for controlling at least one characteristic of the group consisting of: a position of the mass, a velocity of the mass, and an acceleration of the mass, and wherein the controller is adapted to control the mass with a response time of 1000 ms or less.
10. The damper system of any preceding clause, wherein the controller is connected to a vibrations sensor.
11. A wind turbine comprising:
   a damper system according to any preceding clause.
12. A method for reducing frame vibrations of a frame in a nacelle of a wind turbine comprising actively controlling the movement of a mass being positioned outside a vibration center, wherein the mass is actively controlled by a drive mechanism accelerating the mass with respect to the frame.
13. The method of clause 12, wherein the drive mechanism accelerates the mass with a reaction time of 50 ms or less.
14. The method of clause 12 or 13, wherein the drive mechanism is controlled by a controller receiving a vibrations state signal of the vibrations of the wind turbine.
15. The method of any of clauses 12 to 14, wherein the active control reduces a torsional vibration around a vertical axis of the wind turbine.
16. A method for reducing frame vibrations of a frame in a nacelle of a wind turbine comprising actively controlling the torque of a generator in order to generate lateral forces to the frame.
17. The method of clause 16, wherein the drive mechanism accelerates the mass with a reaction time of 50 ms or less.
18. The method of clause 16 or 17, wherein the torque is controlled by a controller receiving a vibrations state signal of the vibrations of the frame.
19. The method of any of clauses 16 to 18, wherein the torque is controlled such that the lateral forces applied to the frame essential oppose a vibration movement direction of the frame.
20. The method of any of clauses 16 to 19, wherein the active control reduces a torsional vibration around a vertical axis of the wind turbine.

## Claims

1. A damper system for damping frame vibrations of a wind turbine (100) having a tower (20), a nacelle (22), a frame (330,332) in the nacelle, at least one rotor blade (28), and a generator, the damper system comprising:
a mass (110,310) for damping vibrations of the frame, wherein the mass is positioned outside a vibration center;
at least one drive mechanism (322) adapted for actively controlling a movement of the mass.

2. The damper system of claim 1, wherein the mass (110,310) is positioned in length direction within the ending 30% of a length, wherein the length is defined from the tower axis to the end of the frame in a direction from the rotor blade to the opposing end of the nacelle.

3. The damper system of any of claims 1 or 2, wherein the mass per power output of the wind turbine (100) is 100 kg/MW to 1000 kg/MW.

4. The damper system of any of claims 1 to 3, wherein the at least one drive mechanism (322) is adapted for actively controlling a movement of the mass (110,130) in a lateral direction.

5. The damper system of any of claims 1 to 4, wherein a controller (52) is connected to a vibrations sensor (514).

6. A wind turbine (100) comprising: a damper system according to any of claims 1 to 5.

7. A method for reducing frame vibrations of a frame (330,332) in a nacelle (22) of a wind turbine (100), comprising:
actively controlling the movement of a mass (110,310) being positioned outside a vibration center, wherein the mass is actively controlled by a drive mechanism (322) accelerating the mass with respect to the frame.

8. The method of claim 7, wherein the drive mechanism (322) is controlled by a controller (52) receiving a vibrations state signal of the vibrations of the wind turbine.

9. A method for reducing frame vibrations of a frame (330,332) in a nacelle (22) of a wind turbine (100) comprising
actively controlling the torque of a generator (36) in order to enerate lateral forces to the frame.

10. The method of claim 9, wherein the torque is controlled such that the lateral forces applied to the frame essential oppose a vibration movement direction of the frame (330,332).
